# EUROPEAN PATENT APPLICATION

(11) **EP 1 667 145 A1**
(43) Date of publication of application: **07.06.2006**
(21) Application number: 04770821.9
(22) Date of filing: 20.07.2004
(51) Int. Cl.: G11B 20/10, G11B 20/12, G11B 27/00

(54) **INFORMATION RECORDING/REPRODUCTION DEVICE, INFORMATION RECORDING/REPRODUCTION METHOD, AND RECORDING MEDIUM**

(30) Priority: 19.09.2003 JP 2003327145; 28.05.2004 JP 2004159416
(71) Applicant: Ricoh Company, Ltd., Tokyo 143-8555 (JP)
(72) Inventor: SAKAI, Shohichiroh, 2290039 (JP)
(74) Representative: Mounteney, Simon James
(86) International application number: PCT/JP2004/010310
(87) International publication number: WO 2005/029488

(57) **Abstract**

An information recording and playing apparatus includes a recording/playing unit to perform background formatting on a rewritable recording medium together with recording/playing of data on the rewritable recording medium according to a user's request. The information recording and playing apparatus further comprises a control unit to prevent a position where the recording/playing of data on the rewritable recording medium is completed from being too far apart from a position where the background formatting is to be started.

## Description

### TECHNICAL FIELD

The present invention generally relates to an information recording and playing device such as a DVD recorder reading/writing data of a rewritable optical disk such as a CD-R, a CD-RW, a DVD+R, a DVD+RW, and the like, a method of the same, and a recording medium.

### BACKGROUND ART

As a file system of a rewritable optical disk (rewritable recording medium) such as a CD-R, a CD-RW, a DVD+R, and a DVD+RW, a universal disk format (UDF) is used.

However, according to the UDF, since data recording and playing are randomly performed, it is necessary to format a disk by recording dummy data in advance on all of or a part of region of the optical disk. Accordingly, when all of or a part of the region of the optical disk is to be filled with the dummy data, there is a problem in that the time for the formatting operation increases proportional to the capacity of the recording medium which capacity has recently increased.

As for conventional technology, an information recording and playing apparatus is disclosed in Japanese Laid-Open Patent Application Publications No. 2002-230754, 2003-045117, 2003-132637, and H11-134799, which apparatus enables recording/playing of data according to a user's request soon after the user makes a request of formatting.

However, in a case where real-time recording/playing of data (for example, streaming data such as video) on an optical disk is carried out, when a user does not make a request of recording/playing data, according to the background formatting by filling a specific region of the optical disk with dummy data, the position of an optical pickup may be apart from a position where the recording/playing of the data is performed.

In this case, mechanical operations of the information recording and playing apparatus such as seeking or track jumping to a predetermined position on the optical disk may be performed. The operations may impair simultaneity of recording streaming data transmitted. Hence, a buffer overflow may occur on the streaming data transmission side. On the other hand, the streaming data read and transmitted from the optical disk may lose continuity in decoding according to the delay. Hence, on a video image thereof, block noise may occur or the image may be frozen. In order to prevent these defects, a method is adopted of providing a certain amount of buffer memory on the data transmission side or the data reception side so as to buffer data waiting to be recorded for a period necessary for the mechanical operations in the apparatus.

However, it is difficult to determine a maximum period necessary for the mechanical operations such as seeking or track jumping, which period varies depending on quality of the optical disk, a recorded state, and the status at a time of recording. Hence, the buffer memory is provided in accordance with balance between the transfer rate of the streaming data and the price of the buffer memory.

### DISCLOSURE OF THE INVENTION

It is a general object of the present invention to provide an information recording and playing apparatus that enables simultaneity of background formatting and recording/playing of data according to a user's request in a case of performing background formatting on a rewritable optical disk together with recording/playing of data according to the user's request.

A more specific object of the present invention is to provide an information recording and playing apparatus including a recording/playing unit to perform background formatting on a rewritable recording medium together with recording/playing of data on the rewritable recording medium according to a user's request. The information recording and playing apparatus further comprises a control unit to prevent a position where recording/playing data on the rewritable recording medium is completed from being too far apart from the position where the background formatting is to be started.

According to at least one embodiment of the present invention, ,a method is provided of recording and playing information in an information recording and playing apparatus carrying out background formatting on a rewritable recording medium together with recording/playing of data on the rewritable recording medium according to a user's request.
The method includes a controlling step of preventing a position where the recording/playing of the data according to the user's request is completed from being too far apart from the position where the background formatting is to be started.

According to at least one embodiment of the present invention, a computer readable recording medium is provided storing a program to direct a computer to carry out background formatting of a rewritable recording medium together with recording/playing of data of the rewritable recording medium according to a user's request, and carry out a controlling step of preventing a position where recording/playing data according to the user's request is completed from being too far apart from the position where the background formatting is to be started.

According to an aspect of the present invention, when background formatting is performed on a rewritable optical disk together with recording/playing of data on the rewritable optical disk according to a user's request, simultaneity between the two events can be obtained.

### BRIEF DESCRIPTION OF THE DRAWINGS

FIG. 1 is a block diagram illustrating a configuration example of an optical disk driving device according to an embodiment of the present invention.
FIG. 2 is a flowchart showing the steps of background formatting of an optical disk at a time of recording or playing streaming data according to a CPU of the optical disk driving device shown in FIG. 1.

### BEST MODE FOR CARRYING OUT THE INVENTION

In the following, embodiments of the present invention are described specifically with reference to the accompanying drawings.

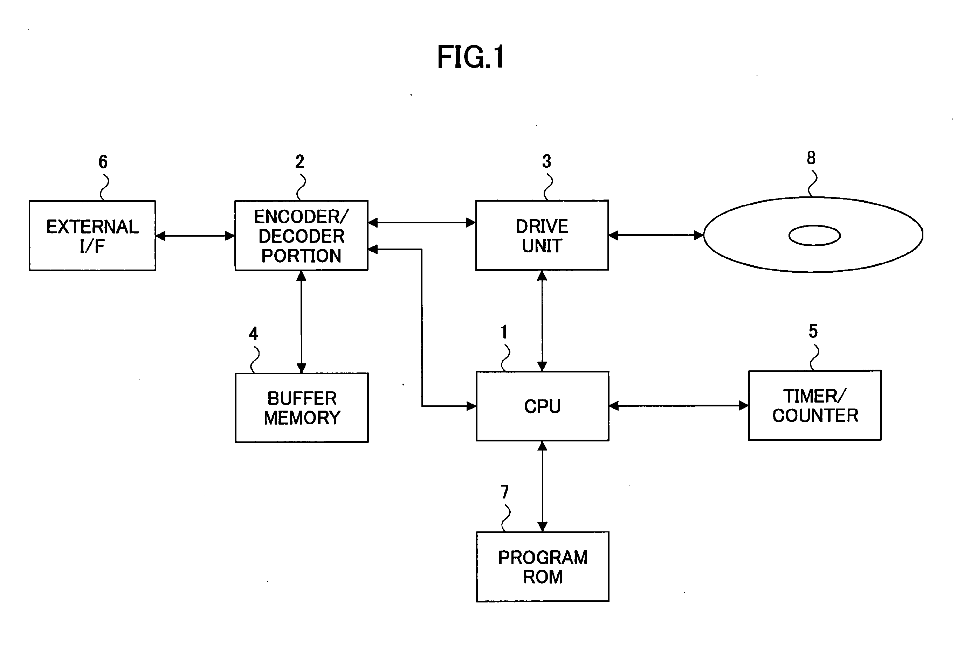

FIG. 1 is a configuration example of an optical disk drive device according to an embodiment of the present invention. The optical disk drive device comprises a CPU 1 performing management and control on an entire system, an encoder/decoder portion 2 for recording/playing data such as streaming data in an optical disk 8, a servo necessary for writing (recording)/reading (playing) data in the optical disk 8, an optical pickup, a spindle motor, a laser diode (LD) as an optical source, a drive unit 3 constituted of RF circuits, a buffer memory 4 for an external interface (I/F) 6, a timer/counter 5 for generating a timing of carrying out background formatting, the external interface (I/F) 6 for exchanging streaming data such as AV streaming data to be recorded in the optical disk 8 with a host computer (not shown), and a program ROM 7 storing a program for controlling the entire system, which program is run by the CPU 1.

The optical disk 8 is a rewritable recording medium such as a CD-R, a CD-RW, a DVD+R, a DVD+RW, and the like for storing streaming data such as video streaming data.

That is, the above mentioned program ROM 7 stores each of the programs according to the present invention so that the CPU 1 can carry out the method of recording/playing information according to the present invention by executing each of the programs. Thereby, the CPU 1 plays a function of each of the units of the information recording/playing device according to the present invention. It should be noted that the programs may be stored in the program ROM 7 at a time of factory shipment of the optical disk drive device. Or the programs may be stored in the optical disk 8 so that the user can install the programs in the program ROM 7 via the drive unit 3.

The optical disk drive device includes a function of UDF file system according to control of the CPU 1 so as to realize random access to the rewritable optical disk 8. The background formatting of the optical disk 8 is performed by the control of the CPU 1. The background formatting is an operation of filling all of or a specific region of the optical disk 8 with dummy data.

When formatting the optical disk 8 according to the background formatting, not all of the regions of the optical disk 8 to be recorded are formatted at once, but only a minimum region of the optical disk 8 is formatted. The remaining regions (unformatted regions) are automatically formatted by the control of the CPU 1 while writing/reading data according to the user's request is not being performed.

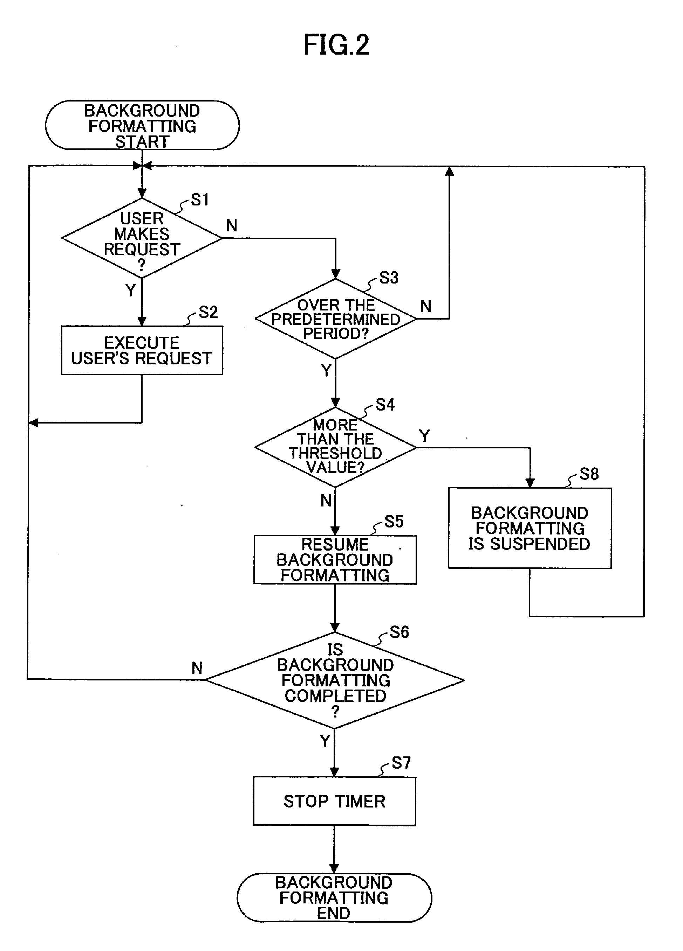

FIG. 2 is a flowchart showing the steps of the background formatting of the optical disk 8 when streaming data are recorded/played by the CPU 1 of the optical disk drive device shown in FIG. 1.

With reference to the flowchart shown in FIG. 2, operations and controls are described, which operations and controls are performed by the CPU 1 executing the programs according to the present invention.

The CPU 1 begins the operations and controls by making a request of carrying out background formatting. In step S1, the CPU 1 determines whether the user makes a request of recording/playing streaming data in the optical disk from the host computer. If the CPU 1 determines the user makes a request, the CPU 1 executes recording/playing the streaming data in the optical disk according to the user's request in step S2 and returns to step S1.

On the other hand, if the CPU 1 determines the user does not make a request in step S1, a time is measured in step S3 from when the recording/playing the streaming data according to the user's request is completed. Then, the CPU 1 compares the measured time with a predetermined period and determines whether the measured time exceeds the predetermined period. If the measured time is less than the predetermined period, the process returns to step S1. On the other hand, if the measured time is greater than the predetermined period, a position where the recording/playing of the streaming data is completed is compared with the position where the background formatting is to be started in step S4. Then, the CPU 1 determines whether the positions are apart from each other by more than a predetermined threshold value (greater than a predetermined distance).

Here, the predetermined threshold value is a certain distance where track jumping or seeking can be stably carried out according to a characteristic of the mechanism, servo utilized in the optical disk drive device, or optimum drive performance provided by an algorithm.

If the CPU 1 determines the positions are further apart than the threshold value in step S4, the CPU 1 suspends the background formatting (the background formatting is pending) in step S8 so as to prevent the position where the background formatting is to be started from being too far apart from the position where recording/playing streaming data according to the user's request is completed. Then, the process returns to step S1.

On the other hand, if the CPU 1 determines the positions are not apart more than the threshold value in step S4, the CPU 1 resumes the background formatting in step S5 and determines whether the background formatting is completed in step S6. If the background formatting is not completed, the process returns to step S1. On the other hand, if the background formatting is completed, the process is terminated by stopping the timer in step S7.

As above described, when the user makes a request of recording/playing data while the CPU 1 is carrying out the background formatting, the data recording/playing according to the user's request is performed. Then, time is measured from when the recording/playing data according to the user's request is completed. If the measured time is greater than a predetermined period, the position where the data recording/playing is completed is compared with the position where the background formatting is to be started. When the positions are apart from each other by greater than a predetermined distance, the background formatting is suspended so as to prevent the position where the recording/playing of the data according to the user's request is completed from being too apart from the position where the background formatting is to be started. Accordingly, a distance between the position where the data recording/playing is completed and the position where the background formatting is to be started can be maintained always in a certain range so as to perform the background formatting of the optical disk 8 together with recording/playing of the streaming data stably and simultaneously.

Moreover, as for another method of obtaining simultaneity of the two events, i.e., the background formatting of the optical disk and recording/playing the streaming data, a method is provided of always controlling the distance with the external I/F 6.

In this case, a host computer such as a PC connected to the external I/F 6, a device for generating and playing AV streaming data or the like can maintain and control a desirable state for realizing the simultaneity according to the position where the recording/playing of the streaming data of the optical disk is completed and the position where the background formatting is to be started.

Accordingly, a positional relationship is monitored, between the position where the background formatting is to be started and the position where the recording/playing of the streaming data according to the user's request is completed, so that the distance therebetween is controlled not to be so far apart from each other. Therefore, even when the background formatting is in process, the recording/playing of the streaming data can be performed without being delayed.

In addition, the position where the background formatting is to be started is compared with the position where the recording/playing of the streaming data according to the user's request is completed so as to control the operation of the background formatting. Accordingly, the distance between the position where the background formatting is to be started and the position where the recording/playing of the streaming data is completed may be maintained in a predetermined scope.

Further, the position where the background formatting is to be started is compared with the position where the recording/playing of the streaming data according to the user's request is completed. Thereby, the distance between the position where the background formatting is to be started and the position where the recording/playing of the streaming data is completed is maintained in a predetermined scope. Accordingly, it is possible to achieve the simultaneity of recording/playing of the streaming data.

Moreover, after a predetermined period elapses since the recording/playing of the streaming data according to the user's request has been completed, the start of the background formatting is controlled. Accordingly, operations of both the user's request and the background formatting can be performed without simultaneous occurrences.

Furthermore, a threshold value can be variable in accordance with the hardware to be used, which value is provided for comparing the position where the background formatting is to be started with the position where the recording/playing of the streaming data is to occur. Accordingly, the threshold value does not have to depend on the hardware characteristics.

It should be noted that an example is given of only streaming data in the present embodiment, but the embodiment is not limited to only the streaming data. The present invention can be realized in the same manner as above described in a case where ordinary data (for example, a document, a static image and the like) are mixed with the streaming data.

### INDUSTRIAL APPLICABILITY

The present invention can also be applied to a personal computer such as a desktop computer and a notebook computer.

## Claims

1. An information recording and playing apparatus, comprising a recording/playing unit to perform a background formatting on a rewritable recording medium together with a recording/playing of data on the rewritable recording medium according to a user's request,
wherein
said information recording and playing apparatus further comprises a control unit to prevent a position where the recording/playing of data on the rewritable recording medium is completed from being too far apart from a position where the background formatting is to be started.

2. The information recording and playing apparatus as claimed in claim 1, wherein in a case where a user makes a request of recording/playing data, the control unit performs the recording/playing of the data according to the request, and wherein after the recording/playing of the data according to the request is completed, the control unit prevents the position where the recording/playing of the data is completed from being too far apart from the position where the background formatting is to be started.

3. The information recording and playing apparatus as claimed in claim 2, wherein in a case where the user makes a request of recording/playing data while the background formatting is in process, the control unit performs the recording/playing of the data according to the request,
after the recording/playing of the data according to the request is completed, the control unit compares the position where the recording/playing of the data is completed with the position where the background formatting is to be started, and
if the positions are apart from each other by greater than a predetermined distance, the control unit suspends the background formatting so as to prevent the position where the recording/playing of the data is completed from being too far apart from the position where the background formatting is to be started.

4. The information recording and playing apparatus as claimed in claim 3, wherein in a case where the user makes a request of recording/playing data while the background formatting is in process, the control unit performs the recording/playing of the data according to the request and measures a time from when the recording/playing of the data according to the request is completed,
if the measured time is over a predetermined period, said control unit compares the position where the recording/playing of the data is completed with the position where the background formatting is to be started, and
if the positions are apart from each other by greater than a predetermined distance, the control unit suspends the background formatting so as to prevent the position where the recording/playing of the data is completed from being too far apart from the position where the background formatting is to be started.

5. The information recording and playing apparatus as claimed in claim 3, wherein the predetermined distance is variable in accordance with characteristics of the recording/playing unit and a circuit configuration of the recording/playing unit.

6. The information recording and playing apparatus as claimed in claim 1, wherein said data are streaming data.

7. A method of recording and playing information in an information recording and playing apparatus carrying out a background formatting on a rewritable recording medium together with a recording/playing of data on the rewritable recording medium according to a user's request, comprising a controlling step of preventing a position where recording/playing data according to the user's request is completed from being too far apart from a position where the background formatting is to be started.

8. The method of recording and playing information as claimed in claim 7, wherein said controlling step further comprises the steps of:
performing recording/playing of the data in a case where a user makes a request of recording/playing of the data; and
preventing the position where the recording/playing of the data according to the user's request is completed from being too far apart from the position where the background formatting is to be started after said recording/playing of the data according to the user's request is completed.

9. The method of recording and playing information as claimed in claim 8, wherein said controlling step further comprises the steps of:
performing the recording/playing of the data in a case where the user makes a request of recording/playing data while the background formatting is in process;
comparing the position where the recording/playing of the data is completed with the position where the background formatting is to be started after the recording/playing of the data according to the user's request is completed; and
suspending said background formatting so as to prevent the position where the recording/playing of the data is completed from being too far apart from the position where the background formatting is to be started if the positions are apart from each other by greater than a predetermined distance.

10. The method of recording and playing information as claimed in claim 9, wherein said controlling step further comprises the steps of:
performing the recording/playing of the data in a case where the user makes a request of recording/playing data while the background formatting is in process;
measuring a time from when the recording/playing of the data according to the request is completed;
comparing the position where the recording/playing of the data is completed with the position where the background formatting is to be started if the measured time is over a predetermined period; and
suspending said background formatting so as to prevent the position where the recording/playing of the data is completed from being too far apart from the position where the background formatting is to be started if the positions are apart from each other by greater than a predetermined distance.

11. The method of recording and playing information as claimed in claim 9, wherein the predetermined distance is variable in accordance with characteristics of the recording/playing unit and a circuit configuration of the recording/playing unit.

12. The method of recording and playing information as claimed in claim 7, wherein said data are streaming data.

13. A computer readable recording medium storing a program to direct a computer to carry out a background formatting of a rewritable recording medium together with a recording/playing of data of the rewritable recording medium according to a user's request, and carry out a controlling step of preventing a position where recording/playing data according to the user's request is completed from being too far apart from a position where the background formatting is to be started.

14. The computer readable recording medium as claimed in claim 13, wherein said controlling step further comprises the steps of:
performing recording/playing of the data in a case where a user makes a request of recording/playing of the data, and
preventing the position where the recording/playing of the data according to the request is completed from being too far apart from the position where the background formatting is to be started after said recording/playing of the data according to the request is completed.

15. The computer readable recording medium as claimed in claim 14, wherein said controlling step further comprises the steps of:
performing the recording/playing of the data in a case where the user makes a request of recording/playing data while the background formatting is in process;
comparing the position where the recording/playing of the data is completed with the position where the background formatting is to be started after the recording/playing of the data according to the user's request is completed; and
suspending said background formatting so as to prevent the position where the recording/playing of the data is completed from being too far apart from the position where the background formatting is to be started if the positions are apart from each other by greater than a predetermined distance.

16. The computer readable recording medium as claimed in claim 15, wherein said controlling step further comprises the steps of:
performing the recording/playing of the data in a case where the user makes a request of recording/playing data while the background formatting is in process;
measuring a time from when the recording/playing of the data according to the request is completed;
comparing the position where the recording/playing of the data is completed with the position where the background formatting is to be started when the measured time is over a predetermined period; and
suspending said background formatting so as to prevent the position where the recording/playing of the data is completed from being too far apart from the position where the background formatting is to be started when the positions are apart from each other by greater than a predetermined distance.

17. The recording medium as claimed in claim 15,
wherein the predetermined distance is variable in accordance with characteristics of the recording/playing unit and a circuit configuration of the recording/playing unit.

18. The recording medium as claimed in claim 13,
wherein said data are streaming data.
